# EUROPEAN PATENT SPECIFICATION

(11) **EP 1 450 255 B1**
(45) Date of publication and mention of the grant of the patent: **25.07.2007**
(21) Application number: 03425105.8
(22) Date of filing: 21.02.2003
(51) Int. Cl.: G06F 9/46, G06F 9/38

(54) **Microcontroller device for complex processing procedures and corresponding interrupt management process**
Mikrokontroller und Unterbrechungsverarbeitungsverfahren zur Verwaltung von komplexen Prozeduren
Microcontrôleur et processus de gestion d'interruption pour des procédures de traitement complexes

(43) Date of publication of application: 25.08.2004
(73) Proprietor: STMicroelectronics S.r.l., 20041 Agrate Brianza (Milano) (IT)
(72) Inventor: Musumeci, Orazio, 93012 Gela (Caltanissetta) (IT); Adamo, Santi Carlo, 95030 Gravina di Catania (Catania) (IT); Quattrocchi, Martino, 95020 Acireale (Catania) (IT); Bombaci, Francesco, 98125 Messina (IT)
(74) Representative: Bosotti, Luciano

(56) References cited:
- EP-A- 0 992 889
- EP-A- 1 061 437
- US-A- 5 765 003
- US-A- 6 081 866
- US-A1- 2002 194 466

## Description

### Field of the invention

The present invention relates to techniques for implementing complex processing procedures in microcontrollers, such as procedures that require an iterative execution.

### Description of the known art

In microcontroller devices in which it is necessary to execute repeatedly a set of operations, for example to execute such operations in an iterative manner, a known approach is to adopt the solution of implementing complex processing procedures in a hardware manner, in other words by implementing said processing procedures by means of purposely designed logic circuits.

In particular, it is known to use, for this purpose, a logic circuit configured as a finite state machine, comprised in the control unit of the microcontroller device.

The processing procedure is thus assigned to said finite state machine, which executes it as an atomic instruction, in other words an instruction the execution of which cannot be interrupted. The duration of such processing procedures may be hundreds of cycles of the clock signal of the microcontroller device. Deriving therefrom is the fact that, by adopting the aforesaid solution, the microcontroller device is in effect insensitive to external or internal events, such as the so-called interrupts, for an interval of time corresponding to the execution of the processing procedure.

Microcontroller devices thus suffer from a rigidity of use when they execute complex processing procedures, and this is a reason for a certain slowness in the execution of high-priority routines.

An example of such a microcontroller device is known from the document EP 1 061 437 A1, after which the preamble of the annexed claim 1 is drafted.

From document US 2002/134466 it is known a processor for processing an interruptible repeat instruction including a register for storing a loop count value corresponding to the number of times that the loop is to be repeated.

### Purposes and summary of the invention

The object of the present invention is to provide a solution capable of performing the functions described previously in a more flexible way so as to enable, for example, interruption of an iterative processing procedure executed by means of a finite state machine.

According to the present invention, such an object is achieved thanks to a microcontroller device having the characteristics referred to specifically in the claims that follow. The invention also regards the corresponding method for interrupt control, as well as the corresponding computer program product directly loadable into the memory of a computer, such as a processor, and comprising software code portions that perform the method of the invention when the product is run on a computer.

Basically, the solution according to the invention envisages associating to the control unit registers for storage of information regarding the interrupt that has occurred, and enabling transfer of control of the procedure from the finite state machine that executes it to an interrupt managing module.

As compared to the known solutions, the solution proposed herein is more flexible and reduces processing times.

### Brief description of the annexed drawings

The invention will now be described, purely by way of non-limiting example, with reference to the annexed drawings, in which:
- Figure 1 represents a block diagram of a control unit of the microcontroller device according to the invention; and
- Figure 2 represents a partial schematic circuit diagram of the microcontroller device according to the invention.

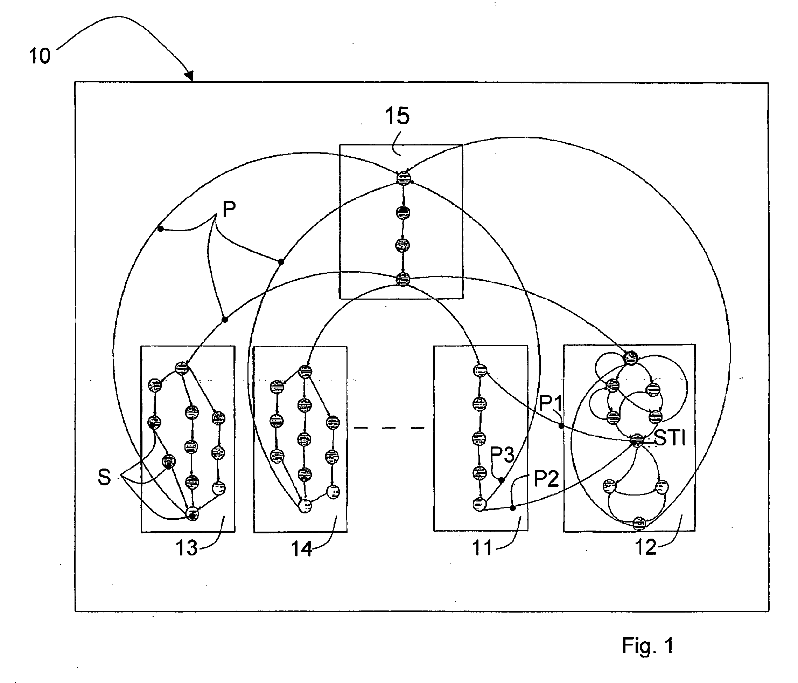

Figure 1 illustrates a block diagram of a control unit 10 of a modular type belonging to a microcontroller device.

The control unit 10 comprises an interrupt managing module 11, a module 12 for managing the iterative procedure, as well as modules that manage standard instructions, among which a loading manager 13 and an arithmetic-operations manager 14. The control unit 10 further comprises an arbiter module 15, which executes the operation of fetching or downloading the instructions from the memory and manages the switchings between the modules that make up the control unit 10.

The modules 11, 12, 13, 14, 15 are all obtained using finite state machines, as may be noted in Figure 1, where inside each module are represented logic states S and transitions P between said logic states S.

The solution proposed basically envisages, upon occurrence of an interrupt, while the module 12 for managing the iterative processing procedure is operating and is in any one of its states, in particular in the state indicated by STI in Figure 1, interruption of the processing procedure and transfer of the control directly to the interrupt managing module 11. When the interrupt routine is through, the control passes directly to the state, designated by STI in Figure 1, of the module 12 for managing the iterative processing procedure, on which the interruption had occurred, and then the managing module 12 continues execution of the iterative processing procedure.

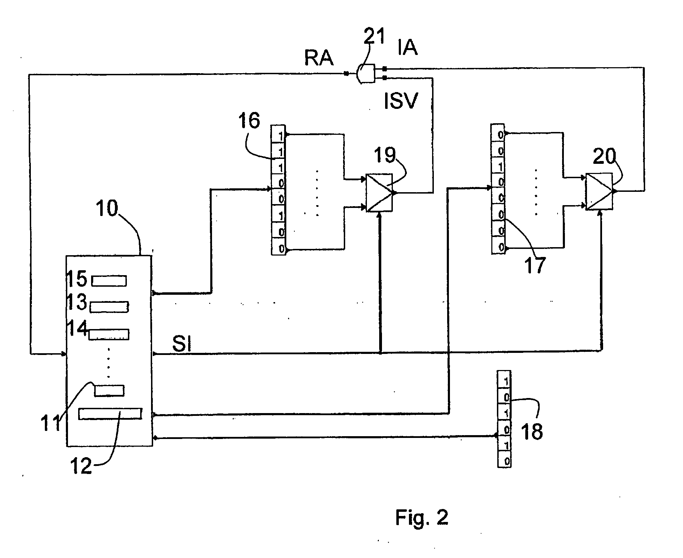

Figure 2 illustrates a schematic circuit diagram of the part of the circuit of the microcontroller device designed for controlling the interruption of iterative processing procedures.

For this purpose, associated to the control unit 10 are three registers for storage of the information that describe the interrupt in course, namely:
- a register of interrupts served, designated by the reference number 16, in which the interrupts being served are stored;
- a register, designated by the reference 17 and having a size corresponding to that of the register of the interrupts served 16, containing the information regarding which interrupt has interrupted execution of the iterative processing procedure; and
- a register designated by the reference number 18, in which the state of the control unit 10 at which the interruption has taken place is stored, said register having size corresponding to the base 2 logarithm of the number of states present in the module 12 for managing the iterative processing procedure.

As may be noted in Figure 2, the control unit 10 writes directly in said registers 16, 17 and 18 and moreover sends a selection signal SI, which contains the information on the interrupt served.

The register 16 comprises, connected to its output, a multiplexer 19, controlled by said selection signal SI, which also controls the operation of a corresponding multiplexer 20, connected to the output of the register 17.

The outputs of said multiplexers 19 and 20 consist of respective signals ISV and IA, which are sent at input to an AND logic gate 21. Said logic gate 21 supplies at output a return selection signal RA, which is sent to the control unit 10.

The operation of the microcontroller device is the following.

Should there arrive, during execution of an iterative processing procedure in the control unit 10, signalling of an external or internal event, i.e., an interrupt, the control flow in said control unit 10 passes from the module for managing the iterative processing procedure 12 to the interrupt managing module 11, by means of the transition designated by P1 in Figure 1. The control unit 10 thus sets the bit corresponding to the interrupt served that has occurred in the registers 16 and 17 and stores in the register 18 a code corresponding to the state STI in the managing module 12 on which the interruption has taken place.

At the end of execution of the routine that has caused the interrupt, the control is again returned to the interrupt controller 11 for execution of an instruction of a "return from interrupt" type (RETI).

The selection signal SI contains the information regarding the interrupt served and is therefore used for setting the multiplexers 19 and 20, so that they select the corresponding outputs of the registers 16 and 17.

The outputs of the multiplexers 19 and 20, i.e., the signals ISV and IA corresponding to the interrupt that has occurred, are sent to the logic gate 21 for generating the return selection signal RA, which indicates whether the control must return directly to the module for managing the iterative processing procedure 12, or else must pass first to the arbiter module 15.

In fact, if the return selection signal RA assumes the logic value "1", this means that the served interrupt from the interrupt routine of which the control is returning is the same one that has interrupted the iterative processing procedure. Consequently, the control can return to the module for managing the iterative processing procedure 12, by means of a transition designated by P2.

In this case, contained in the register 18 is the information regarding the state STI in the finite state machine that implements the control module 12 to which it is necessary to return in order to continue processing.

If the return selection signal RA assumes the logic value "0", this means that the interrupt from which the control is returning has operated on a standard instruction and hence the control must pass to the arbiter module 15 by means of a transition designated by P3.

The solution just described enables considerable advantages to be achieved, as compared to known solutions.

The microcontroller device proposed advantageously enables management of interrupts that intervene on complex processing procedures, in particular iterative procedures implemented in a hardware manner using a finite state machine.

In addition, the interrupts can intervene at any state assumed by the finite state machine.

Advantageously, the control passes directly from the finite state machine that executes the complex processing procedure to the finite state machine that manages the interrupts and vice versa, without involving the arbiter module.

This makes possible an increase in the flexibility of the microcontroller device, thus enabling a higher speed in the execution of high-priority routines.

## Claims

1. A microcontroller device, of the type comprising a control unit (10), said control unit (10) comprising a plurality of logic modules (11, 12, 13, 14, 15), the said logic modules including:
- a processing module (12) having a finite state machine for executing iterative processing procedures;
- an interrupt managing module (11) for managing program interruptions caused by internal or external events; and
- an arbiter module (15) for managing switching said plurality of modules (11, 12, 13, 14, 15),
**characterized in that** associated to said control unit (10) is a set of interruption registers (16,17,18) for storing information regarding interrupts, when said interrupts occur and request arrest of said processing module (12) for executing iterative processing procedures, said set of interruption registers (16, 17, 18) comprising:
- a register (16) of the served interrupts, in which the control unit (10) stores the served interrupts;
- a register (17) containing information regarding which interrupt has interrupted execution of the iterative processing procedure stored by said control unit (10); and
- a register (18) in which there is stored by the control unit (10) the state (STI) of said finite state machine of the module for managing the iterative processing procedure (12) at which said interrupt has occurred.
- said control unit (10) being configured for transferring control, at the end of the interrupt, to the interrupt managing module (11) for execution of an instruction of a return from interrupt type (RETI);
- said interrupt managing module (11) being configured for evaluating whether the interrupt has occurred on the iterative processing procedure; and
- in the positive, restoring (P2) the control to the module for managing the iterative processing procedure (12) at the state (STI) of said finite state machine in which the interrupt occurred;
- in the negative, restoring (P3) the control to the arbiter module (15).

2. The microcontroller device according to Claim 1, **characterized in that** the control unit (10) writes served interrupts and said information regarding which interrupt has interrupted execution of the iterative processing procedure and said state (STI) of the module for managing the iterative processing procedure (12) at which said interrupt has occurred directly in said interrupt registers (16, 17, 18) and moreover sends a selection signal (SI) containing an information on the interrupt served.

3. The microcontroller device according to Claim 2, **characterized in that** connected to the output of the register (16) of the served interrupts and to the output of the register (17) containing the information regarding which interrupt has interrupted execution of the iterative processing procedure, there are provided respective multiplexers (19, 20) driven by said selection signal (SI), and **in that** the outputs of said multiplexers (19, 20) are sent at input to a logic gate (21) performing a logic AND function to obtain a return selection signal (RA).

4. The microcontroller device according to one or more of the preceding claims, **characterized in that** said plurality of logic modules (11, 12, 13, 14, 15) comprises finite state machines.

5. A method for managing the program interrupts in a microcontroller device, which provides for the using of a module having a finite state machine for managing the iterative processing procedure (12) of a control unit (10) belonging to said microcontroller device for executing processing procedures and provides for managing interrupts by means of an interrupt managing module (11) and for managing switching said plurality of modules (11,12, 13, 14, 15) by means of an arbiter module (15), said method being **characterized in that** it comprises the following operations:
- upon occurrence of an interrupt in a state (STI) of the processing procedure, transferring (P1) the control from the module for managing the iterative processing procedure (12) to the interrupt managing module (11);
- storing in interrupt registers (16, 17, 18) information regarding the interrupt that has occurred by:
- storing the served interrupts in a register (16) of the served interrupts;
- storing the information regarding which interrupt has interrupted execution of the iterative processing procedure in a respective register (17);
- storing the state (STI) of said finite state machine of the module for managing the iterative processing procedure (12) at which said interrupt has occurred in a further respective register (18);
- at the end of the interrupt, transferring control to the interrupt managing module (11) for execution of an instruction of a return from interrupt type (RETI);
- evaluating whether the interrupt has occurred on the iterative processing procedure;
- in the positive, restoring (P2) the control to the module for managing the iterative processing procedure (12) at the state (STI) of said finite state machine in which the interrupt occurred;
- in the negative, restoring (P3) the control to the arbiter module (15) .

6. The method according to Claim 5, **characterized in that** said operations of restoring (P3) the control to an arbiter module (15) takes place under the control of a return selection signal (RA), obtained from the information regarding the interrupt that has occurred (ISV, IA) stored in the interrupt registers (16, 17, 18).

7. A computer program product directly loadable in the memory of a computer and comprising software code portions that perform the method according to any one of Claims 5 or 6 when the product is run on a computer.

## Patentansprüche

1. Mikrosteuerungsvorrichtung vom Typ, der eine Steuereinheit (10) aufweist, wobei die Steuereinheit (10) eine Mehrzahl von Logikmodulen (11, 12, 13, 14, 15) aufweist, wobei die Logikmodule aufweisen:
- ein Verarbeitungsmodul (12) mit einer endlichen Zustandsmaschine für das Ausführen von Iterationsverarbeitungsverfahren;
- ein Interruptverwaltungsmodul (11) für das Verwalten von durch interne oder externe Ereignisse verursachte Programmunterbrechungen; und
- ein Vermittlungsmodul (15) für das Verwaltung des Schaltens der Mehrzahl von Modulen (11, 12, 13, 14, 15),
**dadurch gekennzeichnet, dass** der Steuereinheit (10) ein Satz von Interruptregistern (16,17,18) für das Speichern von Information bezüglich Interrupts, wenn die Interrupts auftreten und eine Arretierung des Verarbeitungsmoduls (12) für das Ausführen von Iterationsverarbeitungsverfahren erfordern, zugeordnet ist, wobei der Satz von Unterbrechungsregistern (16, 17, 18) aufweist:
- ein Register (16) der gelieferten Interrupts, in dem die Steuereinheit (10) die gelieferten Interrupts speichert;
- ein Register (17), das Information darüber enthält, welches Interrupt die Ausführung des von der Steuereinheit (10) gespeicherten Iterationsverarbeitungsverfahrens unterbrochen hat; und
- ein Register (18), in dem von der Steuereinheit (10) der Zustand (STI) der endlichen Zustandsmaschine des Moduls für das Verwalten des Iterationsverarbeitungsverfahrens (12) gespeichert wird, in dem das Interrupt aufgetreten ist,
- wobei die Steuereinheit (10) konfiguriert ist für
ein Übertragen der Steuerung am Ende des Interrupts an das Interruptverwaltungsmodul (11) für das Ausführen eines Befehls einer Rückkehr von einem Interrupttyp (RETI);
- wobei das Interruptverwaltungsmodul (11) konfiguriert ist für das Auswerten, ob das lnterrupt bei dem Iterationsverarbeitungsverfahren aufgetreten ist; und
- wenn ja, das Rückgeben (P2) der Steuerung an das Modul für das Verwalten des Iterationsverarbeitungsverfahrens (12) in dem Zustand (STI) der endlichen Zustandsmaschine, in dem das Interrupt aufgetreten ist;
- wenn nein, das Rückgeben (P3) der Steuerung an das Vermittlungsmodul (15).

2. Mikrosteuerungsvorrichtung nach Anspruch 1, **dadurch gekennzeichnet, dass** die Steuereinheit (10) gelieferte Interrupts und die Information darüber, welches Interrupt die Ausführung des Iterationsverarbeitungsverfahrens unterbrochen hat, und den Zustand (STI) des Moduls für das Verwalten des Iterationsverarbeitungsverfahrens (12), in dem das Interrupt aufgetreten ist, direkt in die Interruptregister (16, 17, 18) schreibt und außerdem ein Selektionssignal (Sl) schickt, das eine Information über das gelieferte Interrupt enthält.

3. Mikrosteuerungsvorrichtung nach Anspruch 2, **dadurch gekennzeichnet, dass** verbunden mit dem Ausgang des Registers (16) der gelieferten Interrupts und mit dem Ausgang des Registers (17), das die Information darüber enthält, welches Interrupt die Ausführung des Iterationsverarbeitungsverfahrens unterbrochen hat, entsprechende von dem Selektionssignal (Sl) getriebene Multiplexer (19, 20) vorgesehen sind, und dass die Ausgaben der Multiplexer (19, 20) als Eingabe in ein Logik-Gate (21), das eine logische AND-Funktion ausführt, geschickt werden, um ein Rückselektionssignal (RA) zu erlangen.

4. Mikrosteuerungsvorrichtung nach einem oder mehreren der vorhergehenden Ansprüche, **dadurch gekennzeichnet, dass** die Mehrzahl von Logikmodulen (11, 12, 13, 14, 15) eine endliche Zustandsmaschine aufweist.

5. Verfahren für das Verwalten der Programminterrupts in einer Mikrosteuerungsvorrichtung, das die Verwendung eines Moduls mit einer endlichen Zustandsmaschine für das Verwalten des Iterationsverarbeitungsverfahrens (12) einer Steuereinheit (10), die zu der Mikrosteuerungsvorrichtung für das Ausführen von Verarbeitungsverfahren gehört, schafft und das Verwalten von Interrupts mittels eines Interruptverwaltungsmoduls (11) und das Verwalten des Schaltens der Mehrzahl von Modulen (11, 12, 13, 14, 15) mittels eines Vermittlungsmoduls (15) schafft, wobei das Verfahren **dadurch gekennzeichnet ist, dass** es folgende Operationen aufweist:
- auf das Auftreten eines Interrupt in einem Zustand (STI) des Verarbeitungsverfahrens hin das Übertragen (P1) der Steuerung von dem Modul für das Verwalten des Iterationsverarbeitungsverfahrens (12) an das Interruptverwaltungsmodul (11);
- Speichern der Information bezüglich des aufgetretenen Interrupts in Interruptregistern (17, 18, 19) durch das;
- Speichern der gelieferten Interrupts in einem Register (16) der gelieferten Interrupts;
- Speichern der Information darüber, welches Interrupt die Ausführung des Iterationsverarbeitungsverfahrens unterbrochen hat, in einem entsprechenden Register (17);
- Speichern des Zustands (STI) der endlichen Zustandsmaschine des Moduls für das Verwalten des Iterationsverarbeitungsverfahrens (12), in dem das Interrupt aufgetreten ist, in einem weiteren entsprechenden Register (18);
- am Ende des Interrupts das Übertragen der Steuerung an das Interruptverwaltungsmodul (11) für die Ausführung eines Befehls zur Rückkehr vom Interrupttyp (RETI);
- Auswerten, ob das Interrupt bei dem Iterationsverarbeitungsverfahren aufgetreten ist;
- wenn ja, Rückgeben (P2) der Steuerung an das Modul für das Verwalten des Iterationsverarbeitungsverfahrens (12) in dem Zustand (STI) der endlichen Zustandsmaschine, in dem das Interrupt aufgetreten ist;
- wenn nein, Rückgeben (P3) der Steuerung an das Vermittlungsmodul (15).

6. Verfahren nach Anspruch 5, **dadurch gekennzeichnet, dass** die Operationen des Rückgebens (P3) der Steuerung an ein Vermittlungsmodul (15) unter der Steuerung eines Rückselektionssignals (RA) stattfindet, das von der in den Interruptregistern (16, 17, 18) gespeicherten Information bezüglich des aufgetretenen Interrupts (ISV, lA) erlangt wird.

7. Computerprogrammprodukt, das direkt in den Speicher eines Computers ladbar ist und Softwarecodeteile aufweist, die das Verfahren nach einem der Ansprüche 5 oder 6 ausführen, wenn das Produkt auf einem Computer läuft.

## Revendications

1. Microcontrôleur du type comprenant une unité de commande (10), ladite unité de commande (10) comprenant une pluralité de modules logiques (11, 12, 13, 14, 15), lesdits modules logiques incluant :
- un module de traitement (12) ayant une machine à états finis pour exécuter des procédures de traitement itératives ;
- un module de gestion d'interruptions (11) pour gérer des interruptions de programme causées par des évènements internes ou externes ; et
- un module arbitre (15) pour gérer la commutation desdits modules (11, 12, 13, 14, 15),
**caractérisé en ce qu'**est associé à ladite unité de commande (10) un ensemble de registres d'interruptions (16, 17, 18) pour mémoriser de l'information concernant les interruptions, lorsque lesdites interruptions se produisent et demandent l'arrêt dudit module de traitement (12) pour exécuter des procédures de traitement itératives, ledit ensemble de registres d'interruptions (16, 17, 18) comprenant :
- un registre (16) des interruptions prises en charge, dans lequel l'unité de commande (10) mémorise les interruptions prises en charge ;
- un registre (17) contenant de l'information précisant quelle interruption a interrompu l'exécution de la procédure de traitement itérative mémorisée par ladite unité de commande (10) ; et
- un registre (18) dans lequel l'unité de commande (10) mémorise l'état (STI) de ladite machine à états finis du module pour gérer la procédure de traitement itérative (12) dans laquelle s'est produite ladite interruption,
- ladite unité de commande (10) étant configurée pour transférer la gestion, à la fin de l'interruption, au module de gestion d'interruptions (11) en vue de l'exécution d'une instruction de type retour d'interruption (RETI) ;
- ledit module de gestion d'interruptions (11) étant configuré pour évaluer si l'interruption s'est produite dans la procédure de traitement itérative ; et
- dans l'affirmative, rendre (P2) la main au module pour gérer la procédure de traitement itérative (12) à l'état (STI) de ladite machine à état finis dans laquelle s'est produite l'interruption ;
- dans la négative, rendre (P3) la main au module arbitre (15).

2. Microcontrôleur selon la revendication 1, **caractérisé en ce que** l'unité de commande (10) enregistre les interruptions prises en charge et ladite information précisant quelle interruption a interrompu l'exécution de la procédure de traitement itérative et ledit état (STI) du module pour gérer la procédure de traitement itérative (12) dans laquelle s'est produite ladite interruption directement dans lesdits registres d'interruptions (16, 17, 18) et de plus, envoie un signal de sélection (SI) contenant une information sur l'interruption prise en charge.

3. Microcontrôleur selon la revendication 2, **caractérisé en ce que**, à la sortie du registre (16) des interruptions prises en charge et à la sortie du registre (17) contenant l'information précisant quelle interruption a interrompu l'exécution de la procédure de traitement itérative, sont connectés des multiplexeurs respectifs (19, 20) commandés par ledit signal de sélection (SI), et **en ce que** les sorties desdits multiplexeurs (19, 20) sont envoyées en entrée d'une porte logique (21) qui effectue une fonction logique ET pour obtenir un signal de retour de sélection (RA).

4. Microcontrôleur selon l'une ou plusieurs des revendications précédentes, **caractérisé en ce que** ladite pluralité de modules logiques (11,12,13,14,15) comprend des machines à états finis.

5. Procédé de gestion des interruptions de programme dans un microcontrôleur, qui prévoit l'utilisation d'un module ayant une machine à états finis pour gérer la procédure de traitement itérative (12) d'une unité de commande (10) appartenant audit microcontrôleur pour exécuter des procédures de traitement et assure la gestion des interruptions au moyen d'un module de gestion d'interruptions (11) et pour gérer la commutation desdits modules (11, 12, 13, 14, 15) à l'aide d'un module arbitre (15), ledit procédé étant **caractérisé en ce qu'**il comprend les opérations suivantes :
- lorsqu'il se produit une interruption dans un état (STI) de la procédure de traitement, transférer (P1) la gestion du module pour gérer la procédure de traitement itérative (12) au module de gestion d'interruptions (11) ;
- mémoriser dans des registres d'interruptions (16, 17, 18) de l'information concernant l'interruption qui s'est produite en :
- enregistrant les interruptions prises en charge dans un registre (16) des interruptions prises en charge;
- en enregistrant l'information précisant quelle interruption a interrompu l'exécution de la procédure de traitement itérative dans un registre respectif (17) ;
- en enregistrant l'état (STI) de ladite machine à états finis du module pour gérer la procédure de traitement itérative (12) dans laquelle s'est produite ladite interruption dans un autre registre respectif (18) ;
- à la fin de l'interruption, transférer la gestion au module de gestion d'interruptions (11) en vue de l'exécution d'une instruction de type retour d'interruption (RETI);
- évaluer si l'interruption s'est produite dans la procédure de traitement itérative ;
- dans l'affirmative, rendre (P2) la main au module pour gérer la procédure de traitement itérative (12) à l'état (STI) de ladite machine à état finis dans laquelle s'est produite l'interruption ;
- dans la négative, rendre (P3) la main au module arbitre (15).

6. Procédé selon la revendication 5, **caractérisé en ce que** ladite opération consistant à rendre (P3) la main à un module arbitre (15) se fait sous le contrôle d'un signal de retour de sélection (RA), obtenu à partir de l'information concernant l'interruption qui s'est produite (ISV, IA), mémorisée dans les registres d'interruption (16, 17, 18).

7. Programme d'ordinateur directement chargeable dans la mémoire d'un ordinateur et comprenant des parties de code logiciel qui exécutent le procédé selon l'une quelconque des revendications 5 et 6 lorsque le programme fonctionne dans un ordinateur.
